# FASCICULE DE BREVET EUROPEEN

(11) **EP 0 740 870 B1**
(45) Date de publication et mention de la délivrance du brevet: **04.11.1998**
(21) Numéro de dépôt: 95907046.7
(22) Date de dépôt: 18.01.1995
(51) Int. Cl.: H04L 9/08

(54) **PROCEDE D'EMISSION ET DE RECEPTION DE PROGRAMMES A ACCES CONDITIONNEL UTILISANT DES MOTS DE CONTROLE SPECIFIQUES AUX PROGRAMMES**
VERFAHREN ZUM SENDEN UND EMPFANGEN VON PROGRAMMEN MIT BEDINGTEM ZUGANG UNTER VERWENDUNG VON PROGRAMMSPEZIFISCHEN STEUERWÖRTERN
METHOD FOR THE TRANSMISSION AND RECEPTION OF CONDITIONAL ACCESS PROGRAMMES USING CONTROL WORDS SPECIFIC TO SAID PROGRAMMES

(30) Priorité: 19.01.1994 FR 9400528
(43) Date de publication de la demande: 06.11.1996
(73) Titulaire: FRANCE TELECOM, 75015 Paris (FR); TELEDIFFUSION DE FRANCE, 75015 Paris (FR)
(72) Inventeur: COUTROT, Françoise, F-35510 Cesson-Sévigné (FR)
(74) Mandataire: Signore, Robert
(86) Numéro de dépôt international: FR9500055
(87) Numéro de publication internationale: WO9520280

(56) Documents cités:
- EP-A- 0 528 730

## Description

### Domaine technique

La présente invention a pour objet un procédé d'émission et un procédé de réception de programmes à accès conditionnel, ces programmes étant gérés par un même opérateur.

L'invention s'applique à la télévision, à la radio, à la messagerie, à la transmission de données, etc...

Dans la description qui va suivre, ainsi que dans les revendications, on désignera par "programmes" aussi bien des programmes proprement dits (de télévision, de radio, etc...) que les éléments composant ces programmes, comme par exemple un élément vidéo, ou un élément son, ou un élément de données, etc...

La forte augmentation des supports de diffusion (satellites, câbles, herztien) et des capacités de diffusion sur ces supports (techniques de radio et de télévision numériques) amène les opérateurs de programmes à multiplier les offres de services audiovisuels, sonores ou de données. En particulier, en radio et télévision numériques, grâce aux techniques de compression, les opérateurs de programmes pourront offrir plusieurs programmes pour un coût de transmission équivalent à la transmission d'un seul programme en analogique.

Ainsi, l'offre de services en radio ou en télévision va s'enrichir pour s'organiser en "bouquets" de programmes, chacun de ces bouquets proposant plusieurs programmes gérés par le même opérateur de programmes. De même, une offre de programmes en multi-diffusion ("Near Video On Demand") peut être proposée : dans ce cas, un même programme de télévision est diffusé simultanément sur plusieurs canaux (logiques) par un même opérateur, avec un décalage dans le temps pour le début de chaque version du programme (le décalage est typiquement de quelques minutes entre chaque début). Ceci permet à l'usager d'accéder à une émission diffusée en multi-diffusion avec un temps d'attente maximum de quelques minutes.

La caractéristique commune de ces nouveaux services, tels que bouquet de programmes ou multi-diffusion, est que plusieurs programmes diffusés simultanément sont gérés par un même opérateur de programmes et seules les conditions d'accès aux programmes eux-mêmes peuvent changer d'un programme à l'autre.

Il est à noter que cette caractéristique s'applique aussi à un programme géré par un opérateur dont les éléments de programme (vidéo, sons, données) sont commercialisés suivant des conditions d'accès différentes. Dans la suite de la description, on appellera "multiprogrammation" l'offre de plusieurs programmes ou éléments de programme par un même opérateur de programmes.

Le principe du contrôle d'accès à de tels services repose sur l'embrouillage du programme (vidéo et/ou sons et/ou données) à l'émission et sur le désembrouillage du message reçu sous le contrôle d'un titre d'accès. Les systèmes d'embrouillage et de désembrouillage sont initialisés par une donnée, qui varie généralement aléatoirement et qui est appelée "mot de contrôle". Les informations décrivant les critères d'accès au programme ainsi qu'une forme protégée du mot de contrôle sont incluses dans des messages de contrôle des titres d'accès qui accompagnent le programme embrouillé.

Pour accéder à un programme embrouillé, il faut que le dispositif d'accès conditionnel puisse exploiter l'un des messages de contrôle des titres d'accès associés au programme. Dans le cas de programmes appartenant à une multiprogrammation, chacun des programmes ne doit être restitué en clair que par les récepteurs possesseurs des conditions d'accès adéquates pour ce programme.

### Etat de la technique antérieure

Les procédés actuels permettant de protéger l'accès à un programme diffusé consistent à affecter à chaque programme un message de contrôle des titres d'accès. Cette technique est largement utilisée dans les services de télévision à péage actuels pour lesquels chaque canal est géré par des opérateurs de programmes différents.

Chaque message de contrôle des titres d'accès comporte en général quatre champs :
- un identificateur (spécifique à un opérateur de programme) du service et de la clé de service utilisée,
- un champ précisant les conditions d'accès à satisfaire pour avoir le droit d'accéder au programme,
- le ou les cryptogramme(s) d'un ou de plusieurs mots de contrôle,
- éventuellement un champ de redondance, qui peut être ajouté afin que le processeur de sécurité ne puisse être utilisé en dehors du contexte prévu.

Quand le processeur de sécurité contient un droit d'accès convenable, c'est-à-dire quand il détient la clé de service indiquée par l'identificateur et l'une des conditions d'accès indiquée par le champ de conditions d'accès, le processeur déchiffre le ou les cryptogramme(s) pour reconstituer le ou les mot(s) de contrôle. Ce mot de contrôle permet au terminal de désembrouiller le programme ou le ou les élément(s) de programme auquel il est associé.

Avec la multiplication des canaux, l'organisation des programmes se fédèrera autour d'offres en multiprogrammation. Avec les techniques actuelles, l'accès conditionnel aux programmes appartenant à un même opérateur de programme nécessitera de produire autant de messages de contrôle des titres d'accès qu'il y aura de conditions d'accès différentes pour accéder à ces programmes.

Ces techniques ne bénéficieront pas de la synergie attendue d'un regroupement de programmes sous la banière d'un même opérateur et, de ce fait, n'optimiseront pas la ressource nécessaire pour diffuser les messages de contrôle d'accès afférant à ces programmes. Ceci est d'autant plus pénalisant que les programmes offerts utilisent une ressource restreinte (cas de la radio utilisant des ressources à partir de 32 kbits/s ou de services de données à large audience tels que presse diffusée, météo, ...).

La présente invention a justement pour but de remédier à ces inconvénients.

### Exposé de l'invention

Dans la présente invention, on considère que, comme dans le cas d'une offre de programmes de télévision gérés par des opérateurs de services différents, les utilisateurs de programmes en multiprogrammation acquièrent un ou plusieurs droits d'accès à l'un ou l'autre des programmes offerts par l'opérateur, moyennant les techniques actuelles de gestion des titres d'accès.

L'offre de programmes en multiprogrammation de l'opérateur est ensuite décomposée en autant de programmes qu'il y a de canaux (logiques). Chaque programme (ou chaque élément de programme) est ensuite embrouillé à partir de mots de contrôle spécifiques. Il y a autant de mots de contrôle spécifiques qu'il y a de conditions d'accès différentes pour accéder aux programmes, de façon à garantir la seule réception des programmes aux récepteurs autorisés.

Ces mots de contrôle spécifiques sont calculés par un processeur de sécurité à partir d'un mot de contrôle "racine", valable pour tous les programmes appartenant à un même opérateur de programmes, et diversifiés en utilisant un paramètre de diversification spécifique au programme (référence de canal logique du programme ou de l'élément de programme ou conditions d'accès par exemple).

Aux programmes émis est associée la transmission des messages de contrôle d'accès. Selon l'invention, les messages de contrôle d'accès vont se décomposer en deux parties :
- une première partie, qui est commune à l'ensemble des programmes constitutifs de l'offre de l'opérateur de programmes, contiendra l'identificateur de programme et le ou les cryptogramme(s) de mots de contrôle "racines" des programmes en multiprogrammation,
- une seconde partie, qui est spécifique de chacun des programmes ou élément de programme constitutifs de l'offre, contiendra les conditions d'accès au programme et la redondance cryptographique qui garantit l'authenticité et l'intégrité du message. Le mot de contrôle spécifique est ensuite recalculé par le processeur de sécurité à partir du mot de contrôle "racine" et du paramètre de diversification retenu, si le processeur de sécurité contient une condition d'accès conforme à l'une de celles qui sont attendues.

Cette technique permet, tout en assurant un accès différencié à des programmes gérés par un même opérateur de programmes, grâce aux différentes conditions d'accès, de réduire considérablement la ressource des données nécessaires pour les messages de contrôle des titres d'accès pour un même opérateur de programmes. Typiquement, dans un mode de fonctionnement avec les techniques actuelles, il est nécessaire de transmettre un débit utile d'environ 1 Kbits/s pour transmettre les messages de contrôle d'accès associés à une condition d'accès (en supposant un taux de répétition de deux messages par seconde). L'utilisation de cette technique permet de "factoriser" des données telles que l'identificateur de service et le mot de contrôle "racine" et de diviser par plus de 2 la taille de la partie spécifique à chaque programme. Ainsi, typiquement, s'il faut une ressource de N Kbits/s pour sécuriser N programmes (ou éléments de programmes) gérés par le même opérateur avec les procédés actuels, cette technique permet de ramener la ressource nécessaire à (N+1)/2 Kbits/s.

Cette technique devient vite efficace en mode "bouquet de programmes" ou multi-diffusion d'un même programme (un même programme peut être en diffusion simultanée sur une dizaine de canaux logiques) auquel cas le gain est d'environ une diminution par 2 de la ressource nécessaire.

Cette technique est par ailleurs d'autant plus appréciable que le service est organisé en programmes ou éléments de programme utilisant une ressource restreinte (par exemple : radio ou services de données à large audience).

De façon plus précise, la présente invention a pour objet un procédé d'émission de programmes à accès conditionnel dans lequel, de façon classique, on embrouille les programmes par un mot de contrôle (MC), on forme un message de contrôle de titres d'accès (MCTA) contenant notamment des critères d'accès (CA) et au moins un cryptogramme d'au moins un mot de contrôle (CMC) obtenu par mise en oeuvre d'un algorithme de chiffrement (AC) et on émet le programme embrouillé (PE) ainsi que le message de contrôle des titres d'accès (MCTA). Le procédé de l'invention est caractérisé par le fait que, pour les programmes (Pi) qui sont gérés par un même opérateur :
a) on forme des mots de contrôle spécifiques (MCSi) propres à chaque programme (Pi) géré par cet opérateur, chaque mot de contrôle spécifique (MCSi) étant obtenu par diversification d'un mot de contrôle unique, dit mot de contrôle racine (MCR) propre à l'opérateur ,la diversification s'opérant à partir, notamment, de paramètres de diversification (PDi) propres à chaque programme géré par cet opérateur,
b) on embrouille chaque programme (Pi) à l'aide du mot de contrôle spécifique (MCSi) qui lui est propre,
c) on constitue les messages de contrôle des titres d'accès (MCTA) en deux parties :
   - une première partie, commune à tous les programmes d'un même opérateur et qui est constituée d'un message de contrôle des titres d'accès commun (MCTAC), cette partie commune contenant un identificateur (ID) de l'opérateur de programmes, et de la clé de service (CS) et au moins un cryptogramme (CMCR) du mot de contrôle racine (MCR) propre à chaque opérateur de programme,
   - une seconde partie, spécifique à chaque programme (Pi) et qui est constituée d'une part de messages de contrôle des titres d'accès spécifique (MCTASi), propres à chaque programme (Pi) géré par un même opérateur, ces messages spécifiques (MCTASi) contenant les conditions d'accès (CAi) aux divers programmes (Pi) gérés par le même opérateur, les paramètres de diversification (PDi) s'ils sont différents des conditions d'accès (CAi) et une redondance cryptographique (RCi) garantissant l'intégrité du message complet par la première et la seconde partie.

On peut observer, accessoirement, que l'utilisation d'un mot de contrôle racine et la diversification d'un tel mot est déjà révélée par le document FR-A-2 680 589 (EP-A-0 528 730) mais dans un contexte différent qui est celui de l'émission et la réception de programmes personnalisés. La diversification s'appuie alors sur l'identification de chaque destinataire.

La présente invention a également pour objet un procédé de réception de programmes ayant été émis selon le procédé qui vient d'être défini. De manière générale et connue, dans un tel procédé :
- on reçoit les programmes embrouillés (Pe),
- on sélectionne un programme embrouillé (Pei),
- on vérifie si les critères d'accès (CAi) sont remplis,
- on calcule à partir du message de contrôle des titres d'accès reçu (MCTA), le mot de contrôle (MC) ayant servi à l'embrouillage à l'émission et on désembrouille le programme sélectionné.

Le procédé de l'invention est caractérisé par le fait que, à l'aide de la partie commune du message de contrôle des titres d'accès (MCTAC) propre à l'opérateur, on restitue le mot de contrôle racine (MCR) et, à partir de la partie spécifique du message de contrôle de titre d'accès (MCTASi) propre au programme sélectionné (Pi), on restitue le mot de contrôle spécifique (MCSi) propre à ce programme sélectionné (Pi) en utilisant le mot de contrôle racine (MCR), puis, à l'aide du mot de contrôle spécifique (MCSi) ainsi restitué, on désembrouille le programme sélectionné (Pi).

### Brève description des dessins

- la figure 1 illustre un mode de mise en oeuvre du procédé d'émission selon l'invention ;
- la figure 2 illustre un mode de mise en oeuvre du procédé de réception selon l'invention ;
- la figure 3 montre un premier mode d'obtention d'un mot de contrôle spécifique, à partir du mot de contrôle racine dans la phase d'émission ;
- la figure 4 montre un second mode d'obtention d'un mot de contrôle spécifique, à partir du mot de contrôle racine dans la phase d'émission ;
- la figure 5 montre un premier mode d'obtention du mot de contrôle spécifique à partir du cryptogramme du mot de contrôle racine dans la phase de réception, ce mode d'obtention étant associé à la mise en oeuvre, côté émission, du procédé illustré à la figure 3 ;
- la figure 6 montre un second mode d'obtention du mot de contrôle spécifique à partir du cryptogramme du mot de contrôle racine dans la phase de réception, ce mode d'obtention étant associé à la mise en oeuvre, côté émission, du procédé illustré sur la figure 4.

### Exposé détaillé de modes de mise en oeuvre

Les programmes gérés par un même opérateur sont notés Pi, où l'indice i prend toutes les valeurs entières allant de 1 à n, si n est le nombre de programmes.

Un programme appartenant à un opérateur comprend des éléments de programmes EP1, ..., EPn souvent appelés composantes du programme (vidéo, audio, données), des données de service permettant de décrire la structure du programme et différentes signalisations nécessaires à l'acquisition du programme. Si le programme est protégé par des moyens d'accès conditionnel, des messages de contrôle d'accès au programme sont transmis sur le même support que le programme dans une voie spécialisée qui regroupe tous les messages d'accès conditionnel des programmes appartenant à l'opérateur (et éventuellement de tous les autres programmes si l'on veut optimiser le temps de commutation d'un programme à un autre programme).

Les messages de contrôle des titres d'accès des programmes ou éléments de programme appartenant à un même opérateur sont décrits en deux parties selon l'une des caractéristiques de l'invention :
a) une première partie, commune, notée MCTAC et qui contient :
   - l'identificateur de l'opérateur de programme ID et de la clé de service utilisée CS,
   - le ou les cryptogramme(s) d'un ou plusieurs mot(s) de contrôle racine(s) CMCR,
b) une seconde partie, spécifique à chaque programme ou chaque élément de programme ayant une condition d'accès différente et notée MCTASi ; cette seconde partie contient :
   - un champ de conditions d'accès CA,
   - un paramètre de diversification spécifique PDS ; ce paramètre doit être spécifique à l'accès au programme, donc peut être le champ de conditions d'accès ou/et des paramètres tels qu'une référence logique de programme ou d'élément de programme ; ce champ peut ne pas être transmis si le paramètre de diversification choisi se limite au seul champ de conditions d'accès CA, car il est décrit obligatoirement dans la partie spécifique,
   - une redondance cryptographique RC qui garantit l'intégrité du message complet (partie commune + partie spécifique).

La structure de tels messages peut être la suivante :

| Partie commune : | |
|---|---|
| Identificateur de service | Cryptogramme(s) de mot(s) de contrôle racine(s) |

| Parties spécifiques correspondant à n programmes ou éléments de programme appartenant à un même opérateur : | |
|---|---|
| Conditions d'accès 1 + [paramètre de diversification 1] | Redondance cryptographique 1 |
| Conditions d'accès 2 + [paramètre de diversification 2] | Redondance cryptographique 2 |
| ...... | ...... |
| Conditions d'accès n + [paramètre de diversification n] | Redondance cryptographique n |

La mise en oeuvre de l'invention s'effectue alors schématiquement de la manière suivante.
**A) dans la phase d'émission :**
   - Une voie de description du service VS est produite décrivant l'organisation des programmes, pour chaque programme ou élément de programme et les indicateurs de messages de contrôle des titres d'accès (partie commune et parties spécifiques). Dans la voie de description des services, une indication "multiprogrammation" peut être créée pour permettre le lien entre programmes appartenant à un même opérateur.
   - Les mots de contrôle racine MCR sont tirés aléatoirement et le calcul des mots de contrôle diversifiés MCSi est réalisé pour initialiser chacun des embrouilleurs associés aux éléments de programme.
   - Les messages de contrôle d'accès contenant la partie commune et les parties spécifiques sont engendrés et transmis en association avec les programmes.
**B) dans la phase de réception :**
   - On sélectionne, grâce à la voie de description du service, le programme choisi par l'utilisateur ainsi que le(s) message(s) de contrôle d'accès qui permettent de désembrouiller le(s) élément(s) de programme. Ces messages sont constitués de la partie commune et des parties spécifiques à chaque champ de conditions d'accès.
   - Le processeur de sécurité du récepteur vérifie, pour chaque message de contrôle d'accès (partie commune et partie spécifique) que le message est intègre, qu'il possède un critère d'accès satisfaisant et il calcule le mot de contrôle diversifié MCSi à partir du mot de contrôle racine MCR et du paramètre de diversification retenu PDi.
   - Le mot de contrôle diversifié MCSi initialise le dispositif de désembrouillage qui permet de restituer en clair le programme Pi ou le ou les élément(s) de programme.

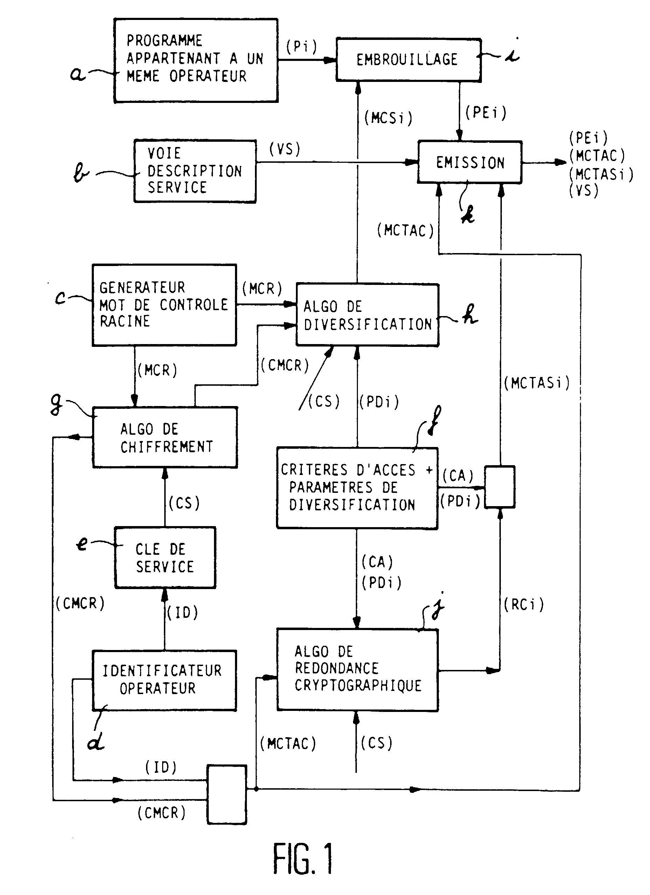

Ces diverses opérations sont illustrées sur les figures 1 (en diffusion) et 2 (en réception). Sur ces figures, les différents blocs représentés correspondent à diverses opérations. On ne doit pas considérer que ces opérations sont effectuées nécessairement par autant de circuits indépendants. L'homme du métier sait que ces opérations sont le plus souvent effectuées globalement, par des microprocesseurs, tant à l'émission qu'à la réception.

Sur la figure 1, les références littérales (a, b, c, ..., i) correspondent aux opérations suivantes :
a) on constitue les programmes à émettre Pi ou les éléments de programme ; tous ces programmes ou éléments de programmes sont gérés par un même opérateur ;
b) on constitue une voie de description de service VS ;
c) on engendre de manière aléatoire un mot de contrôle, valable pour tous les programmes, qui est le mot de contrôle racine MCR ;
d) on définit un identificateur d'opérateur ID ;
e) on définit une clé de service CS associée à l'identificateur ID ;
f) on définit des critères d'accès CA auxquels il faut satisfaire pour avoir le droit d'utiliser la clé de service CS ;
g) à partir du mot de contrôle racine MCR et de la clé de service CS, on met en oeuvre un algorithme, dit de chiffrement AC, pour obtenir un cryptogramme du mot de contrôle racine CMCR ;
h) à partir du mot de contrôle racine MCR et de son cryptogramme CMCR, des paramètres de diversification PDi et de la clé de service CS, on met en oeuvre un algorithme, dit de diversification AD, qui délivre des mots de contrôle spécifiques MCSi ;
i) on embrouille les programmes Pi à l'aide des mots de contrôle spécifiques MCSi et l'on obtient des programmes embrouillés PEi ;
j) à partir de la clé de service CS, de la première partie des messages de contrôle des titres d'accès MCTAC, des critères d'accès CA et des paramètres de diversification PDi, on forme la redondance cryptographique RCi. On constitue alors la seconde partie des messages de contrôle aux titres d'accès MCTASi ;
k) on émet l'ensemble des programmes embrouillés PEi, la voie de description de service VS, la partie commune du message de contrôle d'accès MCTAC, et les parties spécifiques des messages de contrôle des titres d'accès spécifiques MCTASi contenant :
   - les paramètres de diversifiation PDi si ces paramètres ne se limitent pas au seul champ des conditions d'accès CAi ;
   - la redondance cryptographique RCi ;
   - les critères d'accès CAi.

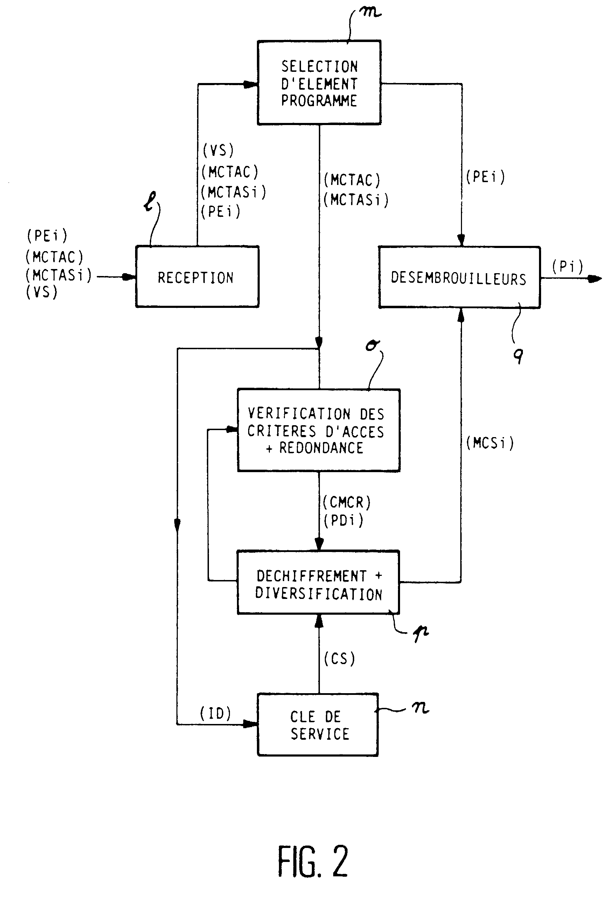

Les opérations effectuées à la réception sont schématisées sur la figure 2 par les blocs 1 à q. Là encore, les opérations sont référencées par des repères littéraux qui correspondent aux paragraphes suivants :
l) on reçoit les programmes ou éléments de programmes embrouillés PEi, la voie de description de service VS, les messages de contrôle des titres d'accès (partie commune MCTAC, et partie spécifique MCTASi contenant les critères d'accès CAi, les paramètres de diversification PDi et la redondance cryptographique RCi) ;
m) on sélectionne un programme ou élément de programme PEi et on extrait les parties communes des messages de contrôle des titres d'accès MCTAC et la partie spécifique du programme choisi MCTASi ;
n) à partir de l'identificateur ID contenu dans MTAC, on restitue la clé de service CS ;
o) à partir des deux parties des messages de contrôle des titres d'accès, MCTAC et MCTASi, on vérifie si les critères d'accès CA sont remplis par les titres d'accès du récepteur et on vérifie la redondance cryptographique RCi, en utilisant la clé de service CS et on délivre le mot de contrôle racine MCR ;
p) à partir du cryptogramme du mot de contrôle racine CMCR, de la clé de service CS, on met en oeuvre un algorithme inverse AC⁻¹ de l'algorithme de chiffrement AC qui a été mis en oeuvre à l'émission dans l'opération e) et on met également en oeuvre un algorithme AD de diversification qui est l'algorithme mis en oeuvre à l'émission dans l'opération f), on restitue alors le mot de contrôle spécifique MCSi ;
q) on désembrouille le programme choisi PEi ou les éléments de programme embrouillés à partir du mot de contrôle spécifique MCSi et on obtient, en clair, le programme Pi ou les éléments de programme.

La description qui suit s'applique à tous les programmes de radio, télévision ou de données à péage gérés par un même opérateur de programme et, en particulier, aux systèmes de radio et de télévision numérique à péage. Cette description s'applique aux services de télévision utilisant le standard MPEG2.

Il est proposé d'ajouter les informations permettant d'introduire des identificateurs de messages de contrôle d'accès communs à tous les programmes de l'opérateur et les identificateurs de messages de contrôle d'accès spécifiques à chacun des programmes.

La table de description d'un service audiovisuel se décompose en quatre niveaux principaux :
N1) **réseau :** ensemble des programmes disponibles sur le réseau, ces programmes étant organisés et regroupés en "multiprogrammations", chaque multiprogrammation étant gérée par un opérateur,
N2) **multiprogrammation :** ensemble des programmes gérés par un même opérateur,
N3) **programme :** entité audiovisuelle ou de données,
N4) **élément de programme** (ou composante) : les composantes constitutives d'un programme (audio, vidéo, data).

Suivant le niveau du caractère commun des programmes, les identificateurs de messages de contrôle des titres d'accès communs et spécifiques se trouveront placés à l'un ou à l'autre des niveaux :
- si le réseau appartient également à un seul opérateur de programme, alors les identificateurs de messages de contrôle d'accès communs seront placés au niveau réseau (N1) et les identificateurs de messages de contrôle d'accès spécifiques au niveau programme (N3) ou éléments de programme (N4) ;
- si le réseau est partitionné en multiprogrammations appartenant à plusieurs opérateurs différents, les identificateurs de messages de contrôle d'accès communs seront placés au niveau multiprogrammation (N2) et les identificateurs de messages de contrôle d'accès spécifiques au niveau programme (N3) ou éléments de programme (N4) ;
- la technique peut s'avérer déjà intéressante pour optimiser les messages de contrôle des titres d'accès d'un même programme dont les éléments de programme seraient embrouillés suivant des conditions d'accès différentes. Dans ce cas, les identificateurs de messages de contrôle d'accès communs seront placés au niveau programme (N3) et les identificateurs de messages de contrôle d'accès spécifiques au niveau des éléments de programme (N4).

La description de ISO MPEG2 (International Standard Organization-Motion Picture Expert Group 2) dans sa version de novembre 1993 (doc. ISO/IEC 1-13818CD) s'en tenant aux niveaux programme et éléments de programme, le mode de réalisation pourrait être :
- table de description de programme,
   - identificateurs de table,
   - descripteurs de programme,
      - identificateurs du programme,
      - identificateur de messages de contrôle des titres d'accès (partie commune)
      - descripteurs d'élément de programme,
         - identificateur d'élément de programme,
         - identificateur de messages de contôle des titres d'accès (partie spécifique).

Les messages de contrôle des titres d'accès sont conformes à la description donnée ci-dessus, en choisissant comme paramètre de diversification le champ des conditions d'accès :

| Partie commune : | |
|---|---|
| Identificateur de service | Cryptogramme(s) de mot(s) de contrôle racine(s) |

| Parties spécifiques correspondant à n programmes ou éléments de programme appartenant à un même opérateur : | |
|---|---|
| Conditions d'accès 1 | Redondance cryptographique 1 |
| Conditions d'accès 2 | Redondance cryptographique 2 |
| ..... | .... |
| Conditions d'accès n | Redondance cryptographique n |

Les modes de mise en oeuvre de l'algorithme de diversification peuvent être divers suivant les techniques cryptographiques utilisées.

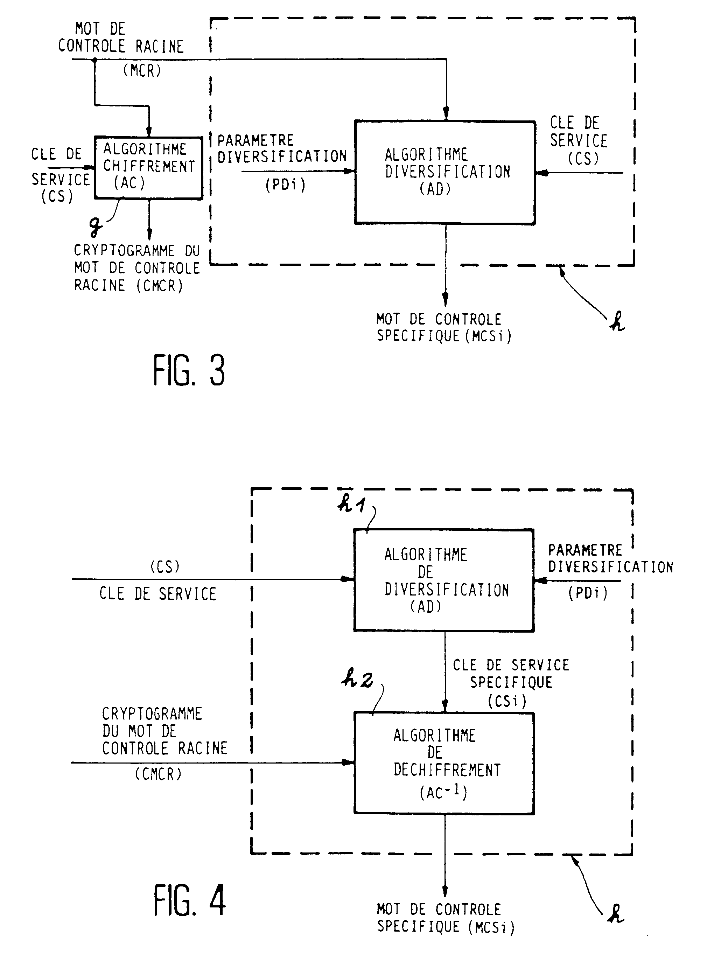

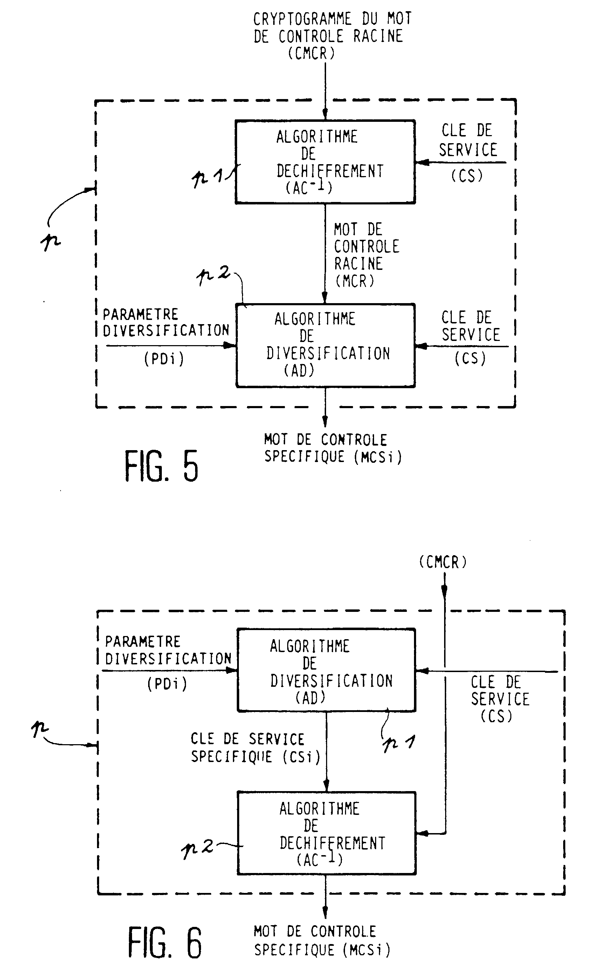

En s'inspirant du document déjà cité (FR-A-2 680 589) qui décrit deux variantes de tels algorithmes, on peut retenir, en émission, les deux variantes illustrées sur les figures 3 et 4 et, en réception, les deux variantes correspondantes des figures 5 et 6. Les références littérales utilisées sur ces figures correspondent aux références déjà employées sur les figures 1 et 2.

Dans la variante illustrée sur la figure 3 de la présente demande pour obtenir, dans l'opération h) définie plus haut à propos de la phase d'émission, des mots de contrôle spécifique MCSsi à partir du mot de contrôle racine MCSi, du paramètre de diversification PDi, et de la clé de service CS, on applique l'algorithme de diversification AD au mot de contrôle racine MCR avec le paramètre de diversification PDi pris comme paramètre de diversification. Pour obtenir le cryptogramme du mot de contrôle racine CMCR, on applique l'algorithme de chiffrement AC au mot de contrôle racine MCR en prenant la clé de service CS comme paramètre de chiffrement (opération g).

Dans la variante de la figure 4, on applique l'algorithme de diversification AD à la clé de service CS en prenant le paramètre de diversification PDi comme paramètre de diversification (opération hl), ce qui donne une clé de service spécifique (CSi) ; puis on applique l'algorithme de déchiffrement AC⁻¹ au cryptogramme du mot de contrôle racine CMCR en prenant la clé de service personnalisée comme paramètre de déchiffrement (opération h2), ce qui donne le mot de contrôle spécifique MCSi.

A la réception, dans le cas de la première variante illustrée sur la figure 5, pour obtenir, à partir du cryptogramme du mot de contrôle racine CMCR, de la clé de service CS et du paramètre de diversification PDi, le mot de contrôle spécifique MCSi, on commence par appliquer au cryptogramme du mot de contrôle racine CMCR l'algorithme de déchiffrement inverse AC⁻¹ en prenant la clé de service CS comme paramètre de déchiffrement (opération p1), ce qui donne le mot de contrôle racine MCR ; puis on applique à ce mot de contrôle racine MCR l'algorithme de diversification AD en prenant le paramètre de diversification PDi comme paramètre de diversification (opération p2), ce qui donne finalement le mot de contrôle spécifique MCSi.

Dans la seconde variante, illustrée sur la figure 6, pour obtenir, à partir du cryptogramme du mot de contrôle racine CMCR, de la clé de service CS et du paramètre de diversification PDi, le mot de contrôle spécifique MCSi, on commence (opération pl) par appliquer l'algorithme de diversification AD à la clé de service CS, le paramètre de diversification PDi, ce qui donne une clé de service spécifique CSi ; puis (opération p2) on applique l'algorithme de déchiffrement AC⁻¹ au cryptogramme du mot de contrôle racine CMCR en prenant la clé de service spécifique CSi comme paramètre de déchiffrement, ce qui donne finalement le mot de contrôle spécifique MCSi.

Dans quelle que variante que ce soit, ayant obtenu le mot de contrôle spécifique, on l'applique à un générateur pseudo-aléatoire ou à un algorithme d'embrouillage délivrant des suites chiffrantes à l'émission et déchiffrantes à la réception.

Les moyens pour embrouiller et désembrouiller les données peuvent être constitués classiquement par des portes OU-exclusif, dont une entrée reçoit les suites chiffrantes/déchiffrantes et l'autre, les données en clair/embrouillées et dont la sortie délivre les données embrouillées/en clair.

En pratique, les traitements peuvent être réalisés par un processeur de sécurité (carte à mémoire). Le processeur délivre les suites (chiffrantes/déchiffrantes) à appliquer aux données à embrouiller/désembrouiller.

Les exemples de mise en oeuvre des algorithmes de chiffrement et des algorithmes de redondance cryptographique sont connus de l'homme du métier, et ne constituent pas en soi l'objet de l'invention. De tels algorithmes sont illustrés par exemple dans la publication FR-A-2 680 589, à laquelle il a été plusieurs fois fait référence dans la présente description.

## Revendications

1. Procédé d'émission de programmes à accès conditionnel dans lequel on embrouille les programmes par un mot de contrôle (MC), on forme un message de contrôle de titres d'accès (MCTA) contenant notamment des critères d'accès (CA) et au moins un cryptogramme d'au moins un mot de contrôle (CMC) obtenu par mise en oeuvre d'un algorithme de chiffrement (AC) et on émet le programme embrouillé (PE) ainsi que le message de contrôle des titres d'accès (MCTA),
ce procédé étant caractérisé par le fait que, pour les programmes (Pi) qui sont gérés par un même opérateur :
a) on forme des mots de contrôle spécifiques (MCSi) propres à chaque programme (Pi) géré par cet opérateur, chaque mot de contrôle spécifique (MCSi) étant obtenu par diversification d'un mot de contrôle unique dit mot de contrôle racine (MCR) propre à l'opérateur ,la diversification s'opérant à partir, notamment, de paramètres de diversification (PDi),
b) on embrouille chaque programme (Pi) à l'aide du mot de contrôle spécifique (MCSi) qui lui est propre,
c) on constitue les messages de contrôle des titres d'accès (MCTA) en deux parties :
- une première partie, commune à tous les programmes d'un même opérateur, et qui est constituée d'un message de contrôle des titres d'accès commun (MCTAC), cette partie commune contenant un identificateur de service (ID) de l'opérateur de programmes, et au moins un cryptogramme (CMCR) du mot de contrôle racine (MCR) propre à chaque opérateur de programme,
- une seconde partie, spécifique à chaque programme (Pi) et constituée de messages de contrôle de titre d'accès spécifique (MCTASi), propres à chaque programme (Pi) géré par un même opérateur, ces messages spécifiques (MCTASi) contenant au moins les conditions d'accès (CAi) aux divers programmes (Pi) gérés par le même opérateur, les paramètres de diversification (PDi) s'ils sont différents des conditions d'accès (CAi) et une redondance cryptographique (RCi) garantissant l'intégrité du message complet formé par la première partie commune et la seconde partie spécifique.

2. Procédé selon la revendication 1, caractérisé en ce qu'on émet également un signal de signalisation constitué par une voie de service (VS) qui contient pour chaque programme (Pi) ou élément de programme, des indicateurs de message de contrôle des titres d'accès.

3. Procédé selon la revendication 2, caractérisé en ce que la voie de service contient également une information dite de multiprogrammation permettant de créer un lien entre différents programmes.

4. Procédé selon la revendication 1, caractérisé en ce que, pour obtenir des mots de contrôle spécifiques (MCSi) à partir du mot de contrôle racine (MCR) et de paramètres (PDi) identifiant les programmes et d'une clé de service (CS), on applique au mot de contrôle racine un algorithme de diversification (AD) utilisant la clé de service (CS) et le paramètre de diversification (PDi).

5. Procédé selon la revendication 1, caractérisé par le fait que, pour obtenir des mots de contrôle spécifiques (MCSi) à partir du mot de contrôle racine (MCR), de paramètres (PDi) identifiant les programmes et d'une clé de service (CS), on applique un algorithme de diversification (AD) à la clé de service (CS) en utilisant le paramètre de diversification (PDi), ce qui donne une clé de service spécifique (CSi), puis on applique au cryptogramme du mot de contrôle racine (CMCR) un algorithme de déchiffrement (AC⁻¹) inverse de l'algorithme de chiffrement (AC) en prenant la clé de service spécifique (CSi) comme paramètre de déchiffrement.

6. Procédé de réception de programmes (Pi) émis selon le procédé de la revendication 1, dans lequel
- on reçoit les programmes embrouillés (Pe),
- on sélectionne un programme embrouillé (Pei),
- on vérifie si les critères d'accès (CAi) sont remplis,
- à partir du message de contrôle des titres d'accès reçu (MCTA), on reconstitue le mot de contrôle (MC) ayant servi à l'embrouillage à l'émission et on désembrouille le programme sélectionné,
ce procédé étant caractérisé par le fait que, à l'aide de la partie commune du message de contrôle des titres d'accès (MCTAC) propre à l'opérateur, on restitue le mot de contrôle racine (MCR) et, à partir de la partie spécifique du message de contrôle de titre d'accès (MCTASi) propre au programme sélectionné (Pi), on restitue le mot de contrôle spécifique (MCSi) propre à ce programme sélectionné (Pi) en utilisant le mot de contrôle racine (MCR) puis, à l'aide du mot de contrôle spécifique (MCSi) ainsi restitué, on désembrouille le programme sélectionné.

7. Procédé selon la revendication 6, caractérisé par le fait que, pour obtenir à partir du cryptogramme du mot de contrôle racine (CMCR), de la clé de service (CS) et du paramètre de diversification (PDi), le mot de contrôle spécifique (MCSi), on commence par appliquer au cryptogramme du mot de contrôle racine (CMCR) l'algorithme de déchiffrement (AC⁻¹) inverse de l'algorithme de chiffrement (AC) en prenant la clé de service (CS) comme paramètre, ce qui donne le mot de contrôle racine (MCR), puis on applique à ce mot de contrôle racine (MCR) l'algorithme de diversification (AD) en utilisant le paramètre de diversification (PDi)pour obtenir finalement le mot de contrôle personnalisé (MCSi) propre au programme sélectionné.

8. Procédé selon la revendication 6, caractérisé en ce que, pour obtenir, à partir du cryptogramme du mot de contrôle racine (CMCR), de la clé de service (CS) et du paramètre de diversification (PDi), le mot de contrôle spécifique (MCSi), on commence par appliquer l'algorithme de diversification (AD) à la clé de service (CS) en utilisant le paramètre de diversification, pour obtenir la clé de service spécifique (CSi), puis on applique au cryptogramme du mot de contrôle racine (CMCR) l'algorithme de déchiffrement (AC⁻¹) inverse de l'algorithme de chiffrement (AC) en prenant la clé de service spécifique (CSi) comme paramètre de déchiffrement, pour obtenir le mot de contrôle spécifique (MCSi).

## Patentansprüche

1. Verfahren zum Senden von Programmen mit bedingtem Zugang, bei dem man die Programme durch ein Steuerwort bzw. Kontrollwort (MC) verschlüsselt, eine Zugangsberechtigungs-Kontrollnachricht (MCTA) bildet, die insbesondere Zugangskriterien (CA) und wenigstens ein Kryptogramm wenigstens eines Kontrollworts (CMC) enthält, erstellt durch Anwendung eines Chiffrier-Algorithmus, und das verschlüsselte Programm (PE) sowie die Zugangsberechtigungs-Kontrollnachricht (MCTA) sendet, wobei dieses Verfahren
**dadurch gekennzeichnet** ist, daß man für die Programme (Pi), die durch ein und denselben Operator verwaltet werden :
a) spezifische Kontrollwörter (MCSi) bildet, charakteristisch für jedes von diesem Operator verwaltete Programm (Pi), wobei man jedes spezifische Kontrollwort (MCSi) durch Diversifikation eines einzigen bzw. einmaligen, für den Operator charakteristischen, Stammkontrollwort (MCR) genannten Kontrollworts erhält und dabei die Diversifikation aufgrund von Diversifikationsparametern (PDi) erfolgt,
b) man jedes Programm (Pi) mit Hilfe seines charakteristischen Kontrollworts (MCSi) verschlüsselt,
c) man die Zugangsberechtigungs-Kontrollnachrichten (MCTA) aus zwei Teilen bildet:
- einem ersten, allen Programmen desselben Operators gemeinsamen Teil, gebildet durch eine gemeinsame Zugangsberechtigungs-Kontrollnachricht (MCTAC), wobei dieser gemeinsame Teil einen Dienst-Identifizierer (ID) des Programmoperators und wenigstens ein Kryptogramm (CMCR) des für jeden Programmoperator charakteristischen Stammkontrollworts (MCR) enthält,
- einem zweiten, für jedes Programm (Pi) spezifischen Teil, gebildet durch für jedes von demselben Operator verwaltete Programm (Pi) charakteristische spezifische Zugangsberechtigung-Kontrollnachrichten (MCTASi), wobei diese spezifischen Nachrichten (MCTASi) wenigstens die Zugangsbedingungen (CAi) zu den durch denselben operate verwalteten Programmen (Pi) sowie die Diversifikationsparameter (PDi) enthalten, wenn sie verschieden sind von den Zugangsbedingungen (CAi), und eine kryptographische Redundanz (RCi), die die Integrität der durch den ersten, gemeinsamen Teil und den zweiten, spezifischen Teil gebildeten vollständigen Nachricht garantiert.

2. Verfahren nach Anspruch 1, dadurch gekennzeichnet, daß man ebenfalls ein Signalisierungs-Signal sendet, gebildet durch einen Dienstkanal (VS), das für jedes Programm (Pi) oder Programmelement Kontrollnachrichtanzeiger der Zugangsansprüche enthält.

3. Verfahren nach Anspruch 2, dadurch gekennzeichnet, daß der Dienstkanal ebenfalls eine sogenannte Multiprogrammierungs-Information enthält, die ermöglicht, eine Verbindung zwischen verschiedenen Programmen herzustellen.

4. Verfahren nach Anspruch 1, dadurch gekennzeichnet, daß, um aus dem Stammkontrollwort (MCR) und Parametern (PDi), die die Programme identifizieren, und einem Dienstschlüssel (CS) spezifische Kontrollwörter (MCSi) zu erhalten, man auf das Stammkontrollwort einen Diversifikationsalgorithmus (AD) anwendet, indem man den Dienstschlüssel (CS) und den Diversifikationsparameter (PDi) benutzt.

5. Verfahren nach Anspruch 1, dadurch gekennzeichnet, daß, um aus dem Stammkontrollwort (MCR), Parametern PDi, die die Programme identifizieren, und einem Dienstschlüssel (CS) spezifische Kontrollwörter (MCSi) zu erhalten, man einen Diversifikationsalgorithmus (AD) auf den Dienstschlüssel (CS) anwendet, wobei man den Diversifikationsparameter (PDi) benutzt, was einen spezifischen Dienstschlüssel (CSi) ergibt, und man dann auf das Kryptogramm des Stammkontrollworts (CMCR) einen zum Chiffrier-algorithmus (AC) inversen Dechiffrieralgorithmus (AC⁻¹) anwendet, indem man den spezifischen Dienstschlüssel (CSi) als Dechiffrierparameter benutzt.

6. Verfahren zum Empfangen von Programm dem Verfahren des Anspruchs 1, bei dem
- man die verschlüsselten Programme (Pe)
- man ein verschlüsseltes Programm (Pei)
- man überprüft, ob die Zugangskriterien (CAi) erfüllt sind,
- man aufgrund der empfangenen Zugangsberechtigungs-Kontrollnachricht (MCTA) das Kontrollwort (MC) wiederherstellt, das beim Senden zur Verschlüsselung gedient hat, und man das ausgewählte Programm entschlüsselt,
wobei dieses Verfahren **dadurch gekennzeichnet** ist, daß man mit Hilfe des gemeinsamen Teils der für den Operator charakteristischen Zugangsberechtigungs-Kontrollnachricht (MCTAC) das Stammkontrollwort (MCR) wiederherstellt, und man aufgrund des spezifischen Teils der für das ausgewählte Programm (Pi) charakteristischen Zugangsberechtigungs-Kontrollnachricht (MCTASi) das für dieses ausgewählte Programm (Pi) charakteristische spezifische Kontrollwort (MCSi) wiederherstellt, indem man das Stammkontrollwort (MCR) benutzt, und man dann mit Hilfe des derart wiederhergestellten spezifischen Kontrollworts (MCSi) das ausgewählte Programm entschlüsselt.

7. Verfahren nach Anspruch 6, dadurch gekennzeichnet, daß man, um aus dem Stammkontrollwort-Kryptogramm (CMCR), dem Dienstschlüssel (CS) und dem Diversifikationsparameter (PDi) das spezifischen Kontrollwort (MCSi) zu erhalten, damit beginnt, auf das Stammkontrollwort-Kryptogramm (CMCR) den zum Chiffrieralgorithmus (AC) inversen Dechiffrieralgorithmus (AC⁻¹) anzuwenden, indem man den Dienstschlüssel (CS) als Parameter nimmt, was das Stammkontrollwort (MCR) ergibt, und man dann auf dieses Stammkontrollwort (MCR) den Diversifikationsalgorithmus (AD) anwendet, indem man den Diversifikationsparameter (PDi) benutzt, um schließlich das für das ausgewählte Programm charakteristische personalisierte Kontrollwort (MCSi) zu erhalten.

8. Verfahren nach Anspruch 6, dadurch gekennzeichnet, daß man, um aus dem Stammkontrollwort-Kryptogramm (CMCR), dem Dienstschlüssel (CS) und dem Diversifikationsparameter (PDi) das spezifischen Kontrollwort (MCSi) zu erhalten, damit beginnt, den Diversifikationsalgorithmus (AD) auf den Dienstschlüssel (CS) anzuwenden, indem man den Diversifikationsparameter benutzt, um den spezifischen Dienstschlüssel (CSi) zu erhalten, und man dann auf das Stammkontrollwort-Kryptogramm (CMCR) den zum Chiffrieralgorithmus (AC) inversen Dechiffrieralgorithmus (AC⁻¹) anwendet, indem man den spezifischen Dienstschlüssel (CSi) als Dechiffrierparameter nimmt, um das spezifischen Kontrollwort (MCSi) zu erhalten.

## Claims

1. Process for the transmission of conditional access programs, in which scrambling takes place of the programs by a check word (MC), an access title check message (MCTA) is formed, more particularly containing access criteria (CA) and at least one cryptogram of at least one check word (CMC) obtained by using an encrypting algorithm (AC) and transmission takes place of the scrambled program (PE), as well as the access title check message (MCTA),
said process being characterized in that, for the programs (Pi) which are controlled by the same operator:
a) specific check words (MCSi) individual to each program (Pi) controlled by said operator are formed, each specific check word (MCSi) being obtained by diversification of a single check word known as the root check word (MCR) individual to the operator, diversification more particularly taking place on the basis of diversification parameters (PDi),
b) each program (Pi) is scrambled with the aid of the specific check word (MCSi) individual thereto,
c) access title check messages (MCTA) are formed in two parts:
a first part, common to all the programs of the same operator and which is constituted by a common access title check message (MCTAC), said common part containing a service identifier (ID) of the program operator, and at least one cryptogram (CMCR) of the root check word (MCR) individual to each program operator,
a second part, specific to each program (Pi) and constituted by specific access title check messages (MCTASi), individual to each program (Pi) controlled by the same operator, said specific messages (MCTASi) containing at least the access conditions (CAi) to the various programs (Pi) controlled by the same operator, the diversification parameters (PDi) if different from the access conditions (CAi) and a cryptographic redundancy (RCi) guaranteeing the integrity of the complete message formed by the first common part and the second specific part.

2. Process according to claim 1, characterized in that transmission also takes place of a signalling signal constituted by a service channel (VS), which contains, for each program (Pi) or program element, access title check message indicators.

3. Process according to claim 2, characterized in that the service channel also contains a so-called multiprogramming information making it possible to create a link between different programs.

4. Process according to claim 1, characterized in that, to obtain specific check words (MCSi) from the root check word (MCR) and parameters (PDi) identifying the programs and a service key (CS), to the root check word is applied a diversification algorithm (AD) using the service key (CS) and the diversification parameter (PDi).

5. Process according to claim 1, characterized in that, to obtain specific check words (MCSi) from the root check word (MCR), parameters (PDI) identifying the programs and a service key (CS), a diversification algorithm (AD) is applied to the service key (CS) using the diversification parameter (PDi), which gives a specific service key (CSi) and then to the cryptogram of the root check word (CMCR) is applied an inverse decrypting algorithm (AC⁻¹) of the encrypting algorithm (AC) using the specific service key (CSi) as the decrypting parameter.

6. Process for receiving programs (Pi) transmitted according to the process of claim 1, in which
scrambled programs (Pe) are received,
a scrambled program (Pei) is selected,
a check is made to establish if the access criteria (CAi) are fulfilled,
on the basis of the received access title check message (MCTA) reconstitution takes place of the check word (MC) used for scrambling on transmission and the selected program is descrambled,
said process being characterized in that, with the aid of the common part of the access title check message (MCTAC) individual to the operator, the root check word (MCR) is restored and, on the basis of the specific part of the access title check message (MCTASi) individual to the selected program (Pi), restoration takes place of the specific check word (MCSi) individual to said selected program (Pi) using the root check word (MCR) and then, with the aid of the thus restored, specific check word (MCSi), the selected program is descrambled.

7. Process according to claim 6, characterized in that, for obtaining from the cryptogram of the root check word (CMCR), the service key (CS) and the diversification parameter (PDi), the specific check word (MCSi), the first stage is the application to the cryptogram of the root check word (CMCR) of the inverse decrypting algorithm (AC⁻¹) of the encrypting algorithm (AC) taking the service key (CS) as the parameter, which gives the root check word (MCR) and then to said root check word (MCR) is applied the diversification algorithm (AD) using the diversification parameter (PDi) for finally obtaining the personalised check word (MCSi) individual to the selected program.

8. Process according to claim 6, characterized in that, for obtaining from the cryptogram of the root check word (CMCR), the service key (CS) and the diversification parameter (PDi), the specific check word (MCSi), the first stage is the application of the diversification algorithm (AD) to the service key (CS) using the diversification parameter, in order to obtain the specific service key (CSi), followed by the application to the cryptogram of the root check word (CMCR) of the inverse decrypting algorithm (AC⁻¹) of the encrypting algorithm (AC) using the specific service key (CSi) as the decrypting parameter, in order to obtain the specific check word (MCSi).
